# EUROPEAN PATENT APPLICATION

(11) **EP 4 269 197 A1**
(43) Date of publication of application: **01.11.2023**
(21) Application number: 21920260.3
(22) Date of filing: 21.01.2021
(51) Int. Cl.: B60T 13/74, B60T 11/16, B60T 17/18

(54) **INTEGRATED BRAKING APPARATUS FOR VEHICLE AND VEHICLE**

(71) Applicant: Huawei Technologies Co., Ltd., Shenzhen, Guangdong 518129 (CN)
(72) Inventor: JIA, Guangxin, Shenzhen, Guangdong 518129 (CN); LU, Yuhao, Shenzhen, Guangdong 518129 (CN); ZHANG, Yongsheng, Shenzhen, Guangdong 518129 (CN)
(74) Representative: Maiwald GmbH
(86) International application number: PCT/CN2021/073148
(87) International publication number: WO 2022/155858

(57) **Abstract**

This application relates to a drive-by-wire technology in self-driving or driving assistance, and in particular, to an integrated brake apparatus of a vehicle and a vehicle. The integrated brake apparatus is configured to provide a hydraulic pressure for a wheel brake (231). The integrated brake apparatus includes: a first housing (N1) and a second housing (N2), where a first cylinder body (41) of a brake master cylinder (40) and the first housing (N1) are integrally formed; a motor (50) disposed on the first housing (N1); a pump (60) whose pump housing (61) is integrally formed with the first housing (N1); a valve apparatus (24) that is disposed in the second housing and is configured to control opening/closing of an oil passage between the brake master cylinder (40) and a wheel brake (231) and an oil passage between the pump (60) and the wheel brake (231); and an electronic control unit (30) configured to control the motor (50) and the valve apparatus (24). The first housing (N1), the second housing (N2), and the electronic control unit (30) are sequentially arranged in a vehicle width direction. When the foregoing structure is used, a manufacturing process of the integrated brake apparatus can be simplified, and the integrated brake apparatus is not affected by another mechanism when disposed on the vehicle.

## Description

### TECHNICAL FIELD

The present invention relates to a drive-by-wire technology in self-driving or driving assistance, and in particular, to an integrated brake apparatus of a vehicle and a vehicle.

### BACKGROUND

Electronic brake apparatuses of vehicles are becoming more integrated. Currently, an integrated brake apparatus has emerged. The apparatus has a housing on which a pressure supply apparatus (a motor and a pump) providing a brake hydraulic pressure, a valve apparatus for dynamic vehicle control, and a brake master cylinder for backup in case of electrical failure are integrated.

### SUMMARY

However, a housing of an integrated brake apparatus on which these functions are integrated has a large size, and manufacturing is complex. Therefore, special processing is required, resulting in high costs. In addition, flexibility of a layout design of the entire apparatus is limited.

Specifically, because functions of a pump, a brake master cylinder, and a valve apparatus are different, manufacturing requirements for components of the pump, the brake master cylinder, and the valve apparatus are different. Integrating these apparatuses with different functions and different manufacturing requirements on one housing results in complex manufacturing and high manufacturing costs of the housing. For example, installation of the valve apparatus on the housing is usually achieved by riveting. Therefore, stiffness of the housing should not be high. Because an inner wall of the cylinder body of the brake master cylinder needs to be abrasion-resistant, the brake master cylinder needs to be stiff. Therefore, to meet the manufacturing requirements of both the valve apparatus and the brake master cylinder, a material with low stiffness may be used to manufacture the housing, and processing like hardening is performed on the cylinder body that forms the brake master cylinder. However, because processing like hardening is added, manufacturing of the housing is complex, and manufacturing cost increase.

In view of this, a main objective of this application is to provide an integrated brake apparatus that is easy to manufacture and a vehicle having the integrated brake apparatus.

To achieve the foregoing objective, a first aspect of this application provides an integrated brake apparatus of a vehicle, including: a first housing; a brake master cylinder, where the brake master cylinder is configured to generate a hydraulic pressure under action of a brake pedal, and has a first cylinder body, where the first cylinder body and the first housing are integrally formed; a motor, where the motor is disposed on the first housing; a pump, where the pump is configured to generate a hydraulic pressure when driven by the motor, and has a pump housing, where the pump housing and the first housing are integrally formed; a second housing, where the second housing and the first housing are assembled together; a valve apparatus, where the valve apparatus is disposed in the second housing, and is configured to enable either a hydraulic pressure generated by the brake master cylinder or a hydraulic pressure generated by the pump to be supplied to a wheel brake, and is configured to adjust strength of a hydraulic pressure supplied to the wheel brake; a fluid reservoir, where the fluid reservoir having an oil fill port; and an electronic control unit. When a direction that an opening of the oil fill port faces is defined as a vertical direction, the first housing, the second housing, and the electronic control unit are arranged in a first direction, where the first direction is perpendicular to a second direction, and the second direction is the direction that the opening of the oil fill port faces.

When the foregoing integrated brake apparatus is used, braking is performed by a hydraulic pressure generated by the pump driven by the motor in a normal braking condition, but braking is performed by a hydraulic pressure generated by the brake master cylinder when the motor or pump fails, for example, when power is cut off. Specifically, as described above, the valve apparatus supplies either the hydraulic pressure generated by the brake master cylinder or the hydraulic pressure generated by the pump to the wheel brake. In other words, at one time, only one of the hydraulic pressure generated by the brake master cylinder and the hydraulic pressure generated by the pump is supplied to the wheel brake. Therefore, for example, when a driver presses the brake pedal, the electronic control unit controls the motor to drive the pump to generate the hydraulic pressure, and controls the hydraulic control unit, so that the hydraulic control unit opens an oil passage between the pump and the wheel brake. Then the hydraulic pressure generated by the pump driven by the motor is supplied to the wheel brakes, so that the wheel brakes can perform braking. When an electronic pressure supplying apparatus composed of the motor and the pump fails, for example, when power is cut off, the valve apparatus opens an oil passage between the brake master cylinder and the wheel brake. (An implementation may be setting a valve for controlling the oil passage between the brake master cylinder and the wheel brake to a normally-open valve in advance. When power is cut off, the normally-open valve is in an open state due to power-off. In this case, the oil passage between the brake master cylinder and the wheel brake is open.) Consequently, the hydraulic pressure generated by the brake master cylinder is supplied to the wheel brake, so that the wheel brake can perform braking. In addition, the electronic control unit may further control the motor to drive the pump to generate the hydraulic pressure according to a received braking command, so that braking is performed. In this way, self-driving or driving assistance can be supported.

When the integrated brake apparatus with the foregoing structure is used, the cylinder body of the brake master cylinder, the pump housing of the pump, and the first housing are integrally formed, and the valve apparatus is disposed in the second housing that is different from the first housing. Therefore, the first housing and the second housing may be manufactured and processed separately according to different processing requirements, thereby avoiding complex manufacturing and manufacturing cost increase caused due to the use of one housing. That is, when the foregoing integrated brake apparatus is used, manufacturing complexity is reduced, and therefore, the integrated brake apparatus can be easily manufactured.

In addition, due to the use of the structure in which the cylinder body of the brake master cylinder and the pump housing of the pump that have the same or similar processing requirements respectively form on different housings rather than a structure in which the two components are integrally formed on one housing, that is, the first housing, a quantity of sealed points between different housings can be reduced, thereby reducing a probability of sealing leakage and improving an operation reliability of the integrated brake apparatus.

In addition, the motor, the first housing, and the second housing are arranged in the first direction. Therefore, compared with arrangement in the second direction (because the opening of the oil fill port faces upwards, the second direction is a top-bottom direction when the integrated brake apparatus is disposed on the vehicle), the arrangement in the first direction can prevent an upper part of the integrated brake apparatus from being excessively large or tall to improve disposition flexibility of the integrated brake apparatus on the vehicle. To be specific, the integrated brake apparatus is usually disposed in a place in front of the brake pedal and above a driver's foot, where mechanisms such as a windshield drain for a wiper blade are usually disposed. Therefore, if the upper part of the integrated brake apparatus is large or tall, the upper part of the integrated brake apparatus may be easily affected by the windshield drain and the like. This reduces disposition flexibility. However, in this application, the motor, the first housing, and the second housing are arranged in a left-right direction, so that the upper part of the integrated brake apparatus is not excessively large or tall. This improves disposition flexibility of the integrated brake apparatus on the vehicle.

In a possible implementation of the first aspect, the motor is disposed on a side that is of the first housing and that is far away from the electronic control unit.

When the foregoing structure is used, because the motor is disposed on the side that is of the first housing and that is far away from the electronic control unit, working condition deterioration of the electronic control unit that occurs when the electronic control unit is affected by the motor can be suppressed.

In a possible implementation of the first aspect, the motor is disposed on a side that is of the first housing and that is close to the electronic control unit.

When the foregoing structure is used, the motor may be disposed close to the electronic control unit. For example, cabling of a power cord of the motor can be simple. In addition, a motor angle sensor can be integrated in a control unit.

In a possible implementation of the first aspect, a rotation axis of the motor is perpendicular to an axis of the first cylinder body.

In a possible implementation of the first aspect, an included angle between a rotation axis of the motor and an axis of the first cylinder body of the brake master cylinder is 60 degrees to 120 degrees.

In a possible implementation of the first aspect, an oil outlet is disposed on a surface of a side that is of the second housing and that is far away from the electronic control unit, and the oil outlet is configured to supply the hydraulic pressure to the wheel brake.

When the foregoing structure is used, since the oil outlet is disposed on the surface of the side that is of the second housing and that is far away from the electronic control unit, contamination to the electronic control unit caused by, for example, oil leakage can be avoided.

In a possible implementation of the first aspect, a first oil passage port is disposed on the second housing, and the first oil passage port is connected to the fluid reservoir.

In a possible implementation of the first aspect, the first oil passage port is configured to supply oil to the brake master cylinder.

When the foregoing structure is used, an oil passage for supplying oil to the brake master cylinder needs to pass through the second housing, so that the oil passage can be controlled by the valve apparatus. On this premise, because the first oil passage port for supplying oil to the brake master cylinder is disposed on the second housing, oil passage structures of the first housing and the entire integrated brake apparatus are simpler compared with those used when the first oil passage port is disposed on the first housing and then communicates with an internal oil passage in the second housing through an internal oil passage in the first housing.

In a possible implementation of the first aspect, a plurality of second oil passage ports are disposed on the first housing, a plurality of third oil passage ports are disposed on the second housing, and the second oil passage ports are connected to the third oil passage ports.

In a possible implementation of the first aspect, a sealing plate component is disposed between the first housing and the second housing, the sealing plate component is provided with a plurality of through holes corresponding to positions of the second oil passage ports and the third oil passage ports.

For the sealing plate component is disposed, a plurality of sealing components (sealing rings) can be fixed to the sealing plate component. When the foregoing structure is used, the plurality of sealing components and the sealing plate component can be processed as a whole. In this case, assembly can be improved, and assembly time can be shortened.

In a possible implementation of the first aspect, the axis of the first cylinder body of the brake master cylinder extends in a third direction perpendicular to the first direction and the second direction, where the third direction may be defined by a direction of movement of the pedal connecting rod connected to the brake pedal.

In a possible implementation of the first aspect, the rotation axis of the motor extends in the first direction.

In a possible implementation of the first aspect, the pump is a hydraulic cylinder, the pump housing is a second cylinder body, and an axis of the second cylinder body extends in the first direction.

In a possible implementation of the first aspect, the pump is a hydraulic cylinder having a second cylinder body, and the motor may be connected to the pump by using a ball screw mechanism that converts rotation output by the motor into translational movement of a piston in the second cylinder body.

In a possible implementation of the first aspect, the rotation axis of the motor and the axis of the second cylinder body are coaxial.

In a possible implementation of the first aspect, a pedal simulator is further included, where the pedal simulator includes a hydraulic cylinder having a third cylinder body, and an axis of the third cylinder body extends in the third direction perpendicular to the first direction and the second direction.

In a possible implementation of the first aspect, a pedal simulator is further included, where the pedal simulator includes a hydraulic cylinder having a third cylinder body, and an axis of the third cylinder body extends in the second direction.

In a possible implementation of the first aspect, the pump housing is disposed on a side that is of the first housing and that is far away from the second housing, and is integrally formed with the second housing; and the third cylinder body is disposed on the side that is of the first housing and that is far away from the second housing, and is located behind the pump housing. By disposing the pedal simulator in space behind the pump, the space can be fully utilized to make the integrated brake apparatus compact as a whole.

A second aspect of this application provides a vehicle, including: a brake pedal and an integrated brake apparatus, where the brake pedal is configured to swing around an axis extending in a first direction when pressed by a driver. The integrated brake apparatus includes: a first housing; a brake master cylinder, where the brake master cylinder is configured to generate a hydraulic pressure under action of a brake pedal, and has a first cylinder body, where the first cylinder body and the first housing are integrally formed; a motor, where the motor is disposed on the first housing; a pump, where the pump is configured to generate a hydraulic pressure when driven by the motor, and has a pump housing, where the pump housing and the first housing are integrally formed; a second housing, where the second housing and the first housing are assembled together; a valve apparatus, where the valve apparatus is disposed in the second housing, and is configured to enable either a hydraulic pressure generated by the brake master cylinder or a hydraulic pressure generated by the pump to be supplied to a wheel brake, and is configured to adjust strength of a hydraulic pressure supplied to the wheel brake; a fluid reservoir, where the fluid reservoir having an oil fill port; and an electronic control unit. When a direction that an opening of the oil fill port faces is defined as a vertical direction, the first housing, the second housing, and the electronic control unit are arranged in the first direction, where the first direction is perpendicular to a second direction, and the second direction is a direction that the opening of the oil fill port faces.

When the foregoing vehicle is used, braking is performed by a hydraulic pressure generated by the pump driven by the motor in a normal braking condition, but braking is performed by a hydraulic pressure generated by the brake master cylinder when the motor or pump fails, for example, when power is cut off. Specifically, as described above, the valve apparatus supplies either the hydraulic pressure generated by the brake master cylinder or the hydraulic pressure generated by the pump to the wheel brake. In other words, at one time, only one of the hydraulic pressure generated by the brake master cylinder and the hydraulic pressure generated by the pump is supplied to the wheel brake. Therefore, for example, when a driver presses the brake pedal, the electronic control unit controls the motor to drive the pump to generate the hydraulic pressure, and controls the hydraulic control unit, so that the hydraulic control unit opens an oil passage between the pump and the wheel brake. Then the hydraulic pressure generated by the pump driven by the motor is supplied to the wheel brakes, so that the wheel brakes can perform braking. When an electronic pressure supplying apparatus composed of the motor and the pump fails, for example, when power is cut off, the valve apparatus opens an oil passage between the brake master cylinder and the wheel brake. (An implementation may be setting a valve for controlling the oil passage between the brake master cylinder and the wheel brake to a normally-open valve in advance. When power is cut off, the normally-open valve is in an open state due to power-off. In this case, the oil passage between the brake master cylinder and the wheel brake is open.) Consequently, the hydraulic pressure generated by the brake master cylinder is supplied to the wheel brake, so that the wheel brake can perform braking. In addition, the electronic control unit may further control the motor to drive the pump to generate the hydraulic pressure according to a received braking command, so that braking is performed. In this way, self-driving or driving assistance can be supported.

When the integrated brake apparatus with the foregoing structure is used, the cylinder body of the brake master cylinder, the pump housing of the pump, and the first housing are integrally formed, and the valve apparatus is disposed in the second housing that is different from the first housing. Therefore, the first housing and the second housing may be manufactured and processed separately according to different processing requirements, thereby avoiding complex manufacturing and manufacturing cost increase caused due to the use of one housing. That is, when the foregoing integrated brake apparatus is used, manufacturing complexity is reduced, and therefore, the integrated brake apparatus can be easily manufactured.

In addition, due to the use of the structure in which the cylinder body of the brake master cylinder and the pump housing of the pump that have the same or similar processing requirements respectively form on different housings rather than a structure in which the two components are integrally formed on one housing, that is, the first housing, a quantity of sealed points between different housings can be reduced, thereby reducing a probability of sealing leakage and improving an operation reliability of the integrated brake apparatus.

In addition, the motor, the first housing, and the second housing are arranged in the first direction. Therefore, compared with arrangement in the second direction (because the opening of the oil fill port faces upwards, the second direction is a top-bottom direction when the integrated brake apparatus is disposed on the vehicle), the arrangement in the first direction can prevent an upper part of the integrated brake apparatus from being excessively large or tall to improve disposition flexibility of the integrated brake apparatus on the vehicle. To be specific, the integrated brake apparatus is usually disposed in a place in front of the brake pedal and above a driver's foot, where mechanisms such as a windshield drain for a wiper blade are usually disposed. Therefore, if the upper part of the integrated brake apparatus is large or tall, the upper part of the integrated brake apparatus may be easily affected by the windshield drain and the like. This reduces disposition flexibility. However, in this application, the motor, the first housing, and the second housing are arranged in a left-right direction, so that the upper part of the integrated brake apparatus is not excessively large or tall. This improves disposition flexibility of the integrated brake apparatus on the vehicle.

In a possible implementation of the second aspect, the motor is disposed on a side that is of the first housing and that is far away from the electronic control unit.

When the foregoing structure is used, because the motor is disposed on the side that is of the first housing and that is far away from the electronic control unit, working condition deterioration of the electronic control unit that occurs when the electronic control unit is affected by the motor can be suppressed.

In a possible implementation of the second aspect, the motor is disposed on a side that is of the first housing and that is close to the electronic control unit.

When the foregoing structure is used, the motor may be disposed close to the electronic control unit. For example, cabling of a power cord of the motor can be simple. In addition, a motor angle sensor can be integrated in a control unit.

In a possible implementation of the second aspect, a rotation axis of the motor is perpendicular to an axis of the first cylinder body.

In a possible implementation of the second aspect, an included angle between a rotation axis of the motor and an axis of the first cylinder body of the brake master cylinder is 60 degrees to 120 degrees.

In a possible implementation of the second aspect, an oil outlet is disposed on a surface of a side that is of the second housing and that is far away from the electronic control unit, and the oil outlet is configured to supply the hydraulic pressure to the wheel brake.

When the foregoing structure is used, since the oil outlet is disposed on the surface of the side that is of the second housing and that is far away from the electronic control unit, contamination to the electronic control apparatus caused by, for example, oil leakage can be avoided.

In a possible implementation of the second aspect, a first oil passage port is disposed on the second housing, and the first oil passage port is connected to the fluid reservoir.

In a possible implementation of the second aspect, the first oil passage port is configured to supply oil to the brake master cylinder.

When the foregoing structure is used, an oil passage for supplying oil to the brake master cylinder needs to pass through the second housing, so that the oil passage can be controlled by the valve apparatus. On this premise, because the first oil passage port for supplying oil to the brake master cylinder is disposed on the second housing, oil passage structures of the first housing and the entire integrated brake apparatus are simpler compared with those used when the first oil passage port is disposed on the first housing and then communicates with an internal oil passage in the second housing through an internal oil passage in the first housing.

In a possible implementation of the second aspect, a plurality of second oil passage ports are disposed on the first housing, a plurality of third oil passage ports are disposed on the second housing, and the second oil passage ports are connected to the third oil passage ports.

In a possible implementation of the second aspect, a sealing plate component is disposed between the first housing and the second housing, the sealing plate component is provided with a plurality of through holes corresponding to positions of the second oil passage ports and the third oil passage ports.

For the sealing plate component is disposed, a plurality of sealing components (sealing rings) can be fixed to the sealing plate component. When the foregoing structure is used, the plurality of sealing components and the sealing plate component can be processed as a whole. In this case, assembly can be improved, and assembly time can be shortened.

In a possible implementation of the second aspect, the axis of the first cylinder body of the brake master cylinder extends in a third direction perpendicular to the first direction and the second direction, where the third direction may be defined by a direction of movement of the pedal connecting rod connected to the brake pedal.

In a possible implementation of the second aspect, the rotation axis of the motor extends in the first direction.

In a possible implementation of the second aspect, the pump is a hydraulic cylinder, the pump housing is a second cylinder body, and an axis of the second cylinder body extends in the first direction.

In a possible implementation of the second aspect, the pump is a hydraulic cylinder having a second cylinder body, and the motor may be connected to the pump by using a ball screw mechanism that converts rotation output by the motor into translational movement of a piston in the second cylinder body.

In a possible implementation of the second aspect, the rotation axis of the motor and the axis of the second cylinder body are coaxial.

In a possible implementation of the second aspect, a pedal simulator is further included, where the pedal simulator includes a hydraulic cylinder having a third cylinder body, and an axis of the third cylinder body extends in the third direction perpendicular to the first direction and the second direction.

In a possible implementation of the second aspect, a pedal simulator is further included, where the pedal simulator includes a hydraulic cylinder having a third cylinder body, and an axis of the third cylinder body extends in the second direction.

In a possible implementation of the second aspect, the pump housing is disposed on a side that is of the first housing and that is far away from the second housing, and is integrally formed with the second housing; and the third cylinder body is disposed on the side that is of the first housing and that is far away from the second housing, and is located behind the pump housing. In this case, the pedal simulator is disposed in space behind the pump, and the space can be fully utilized. In this way, the integrated brake apparatus is compact as a whole.

It is clearer and easier to understand the foregoing and other aspects of the present invention in descriptions of the following (plurality of) embodiments.

### BRIEF DESCRIPTION OF DRAWINGS

FIG. 1 is a three-dimensional diagram of a vehicle according to an embodiment;
FIG. 2 is a three-dimensional diagram of an integrated brake apparatus according to an embodiment;
FIG. 3 is a front view of the foregoing integrated brake apparatus;
FIG. 4 is an exploded view of the foregoing integrated brake apparatus;
FIG. 5 is a conceptual explanatory view of the foregoing integrated brake apparatus;
FIG. 6 is an exploded view of a motor, a pump, and a first housing of the foregoing integrated brake apparatus;
FIG. 7 is a three-dimensional diagram of the foregoing first housing;
FIG. 8 is a three-dimensional diagram of a fluid reservoir in the foregoing integrated brake apparatus;
FIG. 9 is a three-dimensional diagram of an integrated brake apparatus according to an embodiment of this application;
FIG. 10 is a side view of the integrated brake apparatus in FIG. 9; and
FIG. 11 is an exploded view of the integrated brake apparatus in FIG. 9.

### DESCRIPTION OF EMBODIMENTS

The following describes embodiments of this application with reference to accompanying drawings.

In the following descriptions, directions of top, bottom, front, rear, left, and right are defined based on a vehicle body. Unless otherwise specified, descriptions of related directions are subject to the definition. The left-right direction can also be referred to as a vehicle width direction. In addition, in some of the accompanying drawings, these directions are also indicated.

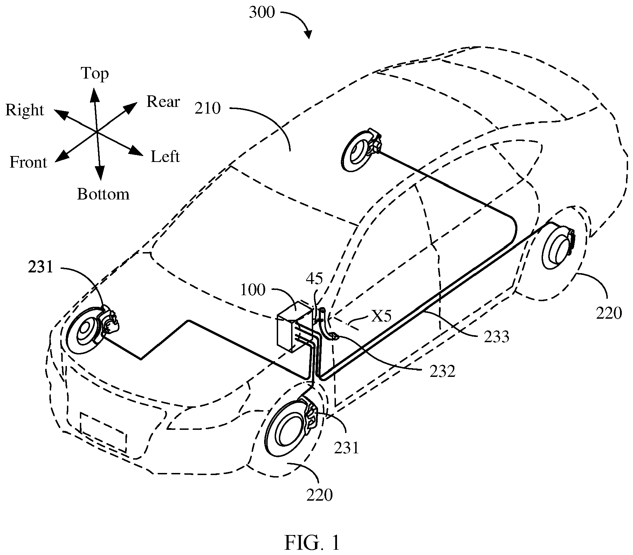

FIG. 1 is a three-dimensional schematic diagram of a vehicle according to a first embodiment. A vehicle 300 has a vehicle body 210. Four wheels 220 are disposed on the vehicle body 210. A wheel brake 231 is provided for each wheel 220. The wheel brake 231 may be a drum brake or a disc brake, and is configured to brake the wheel 220, so as to decelerate or stop the vehicle 300. Further, the vehicle 300 has a brake pedal 232 and an integrated brake apparatus 100. The brake pedal 232 pivots on the vehicle body 210. When a driver presses the brake pedal 232, the brake pedal 232 swings downwards and forwards around the axis X5 extending in the left-right direction. When a driver's foot is eased off the brake pedal 232, the brake pedal 232 is reset under action of a return spring that is not shown in the figure. The integrated brake apparatus 100 is disposed in front of the brake pedal 232, and is positioned approximately in front of the brake pedal 232 and above the driver's foot when the driver (not shown) is in a driver's seat. The integrated brake apparatus 100 is connected to the brake pedal 232 by using a pedal connecting rod 45, and can receive a braking operation of the driver through the brake pedal 232. In addition, the integrated brake apparatus 100 is connected to the four wheel brakes 231 (in particular, wheel cylinders which are not shown) through a brake hose 233. In this way, the integrated brake apparatus 100 can provide a hydraulic pressure to the wheel brakes 231, so that the wheel brakes 231 can perform braking. Further, in FIG. 1, the integrated brake apparatus 100 is only an example, and is shown briefly. A specific structure thereof is not shown.

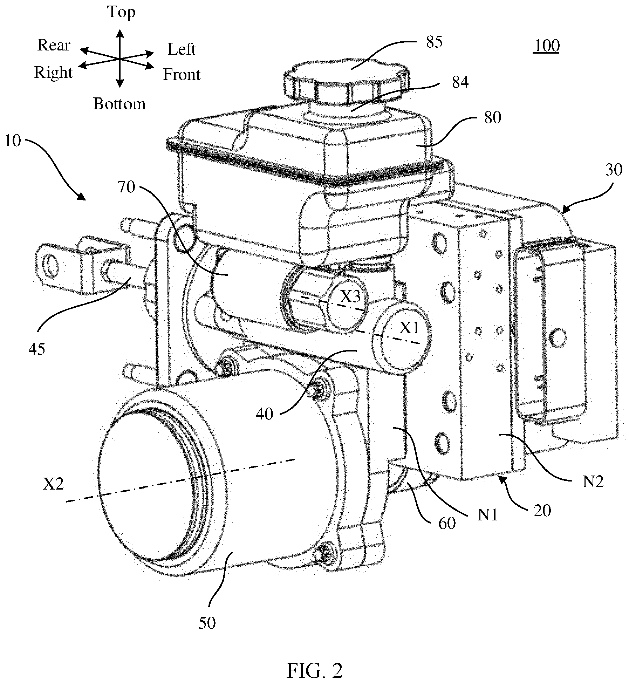

The specific structure of the integrated brake apparatus 100 is described below with reference to FIG. 2 to FIG. 8.

First, the integrated brake apparatus 100 is described briefly with reference to FIG. 2. FIG. 2 is a three-dimensional diagram of the integrated brake apparatus 100. As shown in FIG. 2, the integrated brake apparatus 100 includes a hydraulic unit 10, a hydraulic control unit (HCU: Hydraulic Control Unit) 20, and an electronic control unit (ECU: Electronic Control Unit) 30 that are sequentially arranged from right to left.

The hydraulic unit 10 includes a brake master cylinder 40, a motor 50, a pump 60, a pedal simulator 70, and a fluid reservoir 80. The brake master cylinder 40 is configured to generate a hydraulic pressure when the driver presses the brake pedal. The hydraulic pressure can be provided to the wheel brake 231, so that the wheel brake 231 can brake the wheel 220, which is described in the following section. The pump 60 is configured to generate a hydraulic pressure when driven by the motor 50. As described in the following section, the hydraulic pressure can be provided to the wheel brake 231, so that the wheel brake 231 can brake the wheel 220. Therefore, it can be considered that the motor 50 and the pump 60 constitute an electronic pressure supply apparatus that supplies the hydraulic pressure for braking. Either the hydraulic pressure generated by the brake master cylinder 40 or the hydraulic pressure generated by the pump 60 is supplied to the wheel brake 231.

To be specific, normally, when the driver presses the brake pedal 232, under control of the electronic control unit 30 and the hydraulic control unit 20, braking is performed by a hydraulic pressure generated by the pump 60 driven by the motor 50, but is not performed by a hydraulic pressure generated by the brake master cylinder 40. When the electronic pressure supply apparatus composed of the motor 50 and the pump 60 fails, for example, when power is cut off, the hydraulic pressure generated by the brake master cylinder 40 performs braking. Therefore, it can be considered that the brake master cylinder 40 is a backup for the electronic pressure supply apparatus composed of the motor 50 and the pump 60, and is a backup apparatus. In conclusion, the integrated brake apparatus 100 has two braking modes. One mode is an electronic braking mode for a normal condition. In this case, braking is performed by the hydraulic pressure generated by the electronic pressure supply apparatus composed of the electric motor 50 and the pump 60. The other mode is a backup braking mode for a case in which power of, for example, the electronic pressure supply apparatus, is cut off. In this case, braking is performed by the hydraulic pressure generated by the brake master cylinder 40.

When the driver presses the brake pedal 232, the pedal simulator 70 provides a simulated pedal reaction force to the brake pedal 232 based on the hydraulic pressure generated by the brake master cylinder 40, so that a pedal feeling can be simulated.

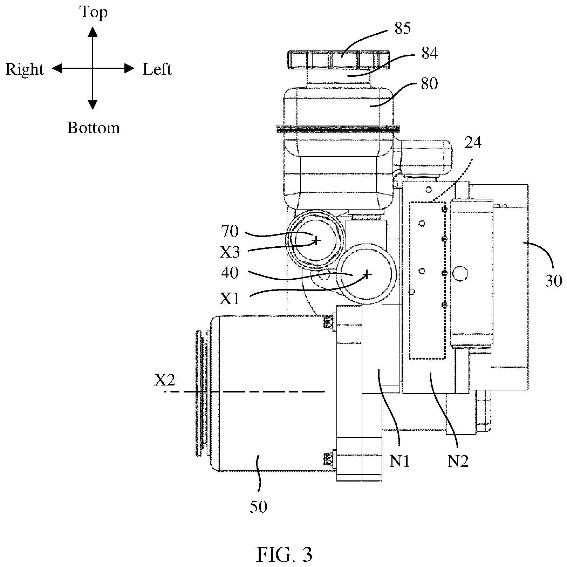

The fluid reservoir 80 stores oil, and is configured to supply working oil (that is, supply oil) to the brake master cylinder 40, the pump 60, the pedal simulator 70, and the like. Further, as shown in FIG. 2 and FIG. 3, the fluid reservoir 80 has an oil fill port 84 and a cover 85. The oil fill port 84 has an opening facing upwards, and is used for filling the fluid reservoir 80 with oil. The cover 85 is disposed on the fill port 84 to prevent foreign objects entering the fluid reservoir 80.

A valve apparatus 24 (FIG. 3) is disposed inside the hydraulic control unit 20. The valve apparatus 24 is used for adjusting a brake hydraulic pressure supplied to the wheel brake 231 or controlling opening/closing (that is, controlling opening and closing) of oil passages to the wheel brake 231, the brake master cylinder 40, and the like. The valve apparatus 24 controls opening/closing of the oil passage to the wheel brake 231, so that either the hydraulic pressure generated by the brake master cylinder 40 or the hydraulic pressure generated by the pump 60 is supplied to the wheel brake 231.

The electronic control unit 30 is mainly configured to control the motor 50 and the valve apparatus 24 of the hydraulic control unit 20.

With the integrated brake apparatus 100 described above, when the driver presses the brake pedal 232, braking is performed by the hydraulic pressure generated by the pump 60 driven by the motor 50 under control of the electronic control unit 30 in combination with the hydraulic control unit 20, or braking is performed by the hydraulic pressure generated by the brake master cylinder 40. In addition, even if the driver does not press the brake pedal 232, when the electronic control unit 30 receives a braking command from a vehicle controller (not shown), the motor 50 drives the pump 60 to generate the hydraulic pressure for braking. In this way, self-driving or driving assistance can be supported.

Structural elements of the integrated brake apparatus 100 are further described in detail below with reference to FIG. 3 to FIG. 8.

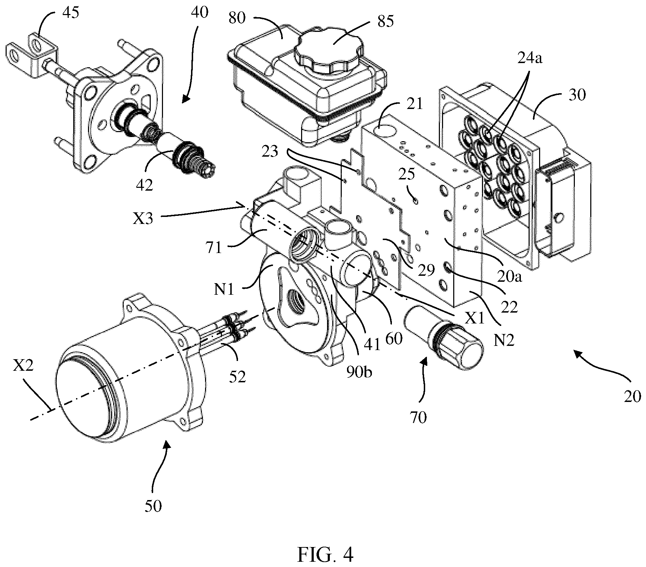

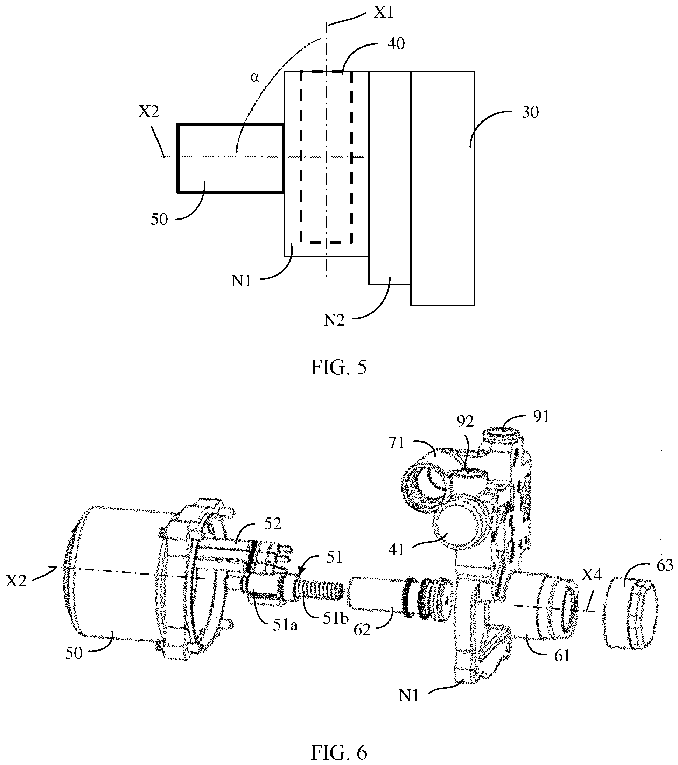

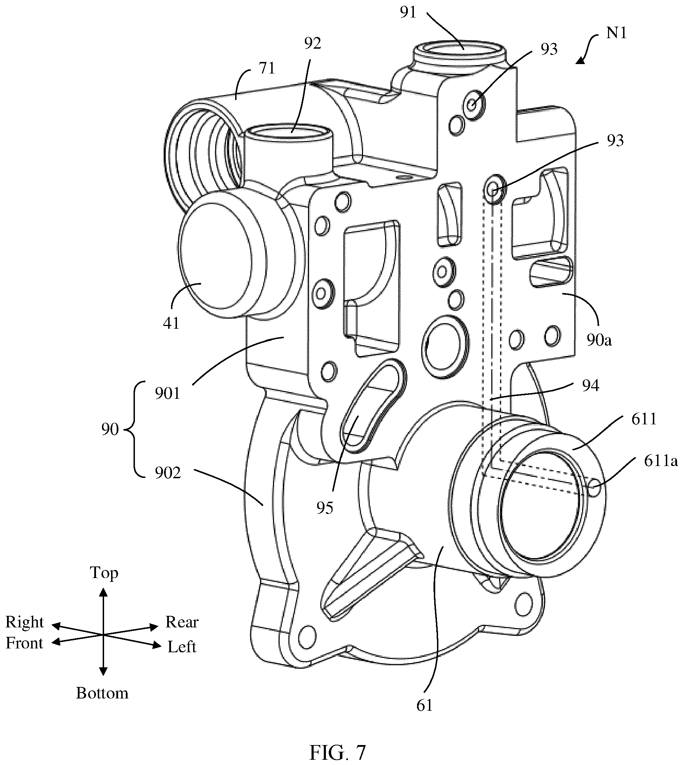

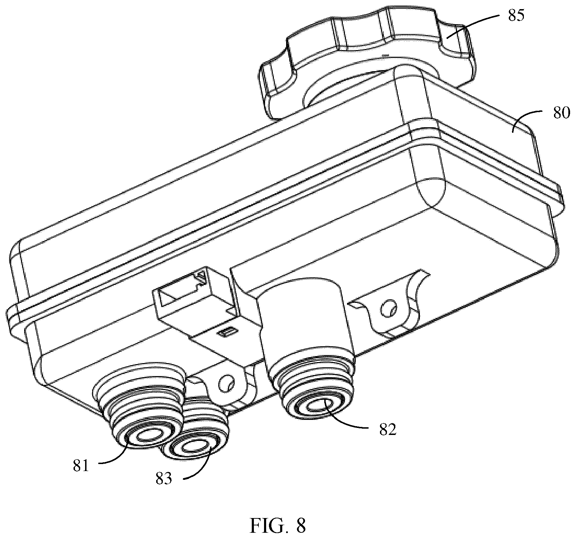

FIG. 3 is a front view of the integrated brake apparatus 100. FIG. 4 is an exploded view of the integrated brake apparatus 100. FIG. 5 is a conceptual explanatory diagram of the integrated brake apparatus 100. FIG. 6 is an exploded view of the motor 50, the pump 60, and a first housing N1. FIG. 7 is a three-dimensional diagram of the first housing N1. FIG. 8 is a three-dimensional diagram of the fluid reservoir 80.

As shown in FIG. 2, FIG. 4, and the like, the hydraulic unit 10 has the first housing N1 on which the brake master cylinder 40, the motor 50, the pump 60, the pedal simulator 70, and the fluid reservoir 80 are all disposed.

The brake master cylinder 40 is a hydraulic cylinder having a cylinder body 41 and a piston 42, and is configured to generate a hydraulic pressure under action of the brake pedal 232. The cylinder body 41 is approximately cylindrical, and is integrally formed with the first housing N1. An axis X1 (also referred to as an axis of the brake master cylinder 40 or a movement axis of the piston 42) of the cylinder body 41 is arranged roughly in a front-rear direction. The piston 42 is disposed in the cylinder body 41 and can move in the front-rear direction in the cylinder body 41. In addition, the integrated brake apparatus 100 further has the pedal connecting rod 45 that can move in the front-rear direction. The pedal connecting rod 45 is connected to the brake pedal 232 (FIG. 1), and is connected to the piston 42. When the driver presses the brake pedal 232, the pedal connecting rod 45 is pushed by the brake pedal 232 and moves forwards, and the pedal connecting rod 45 transfers movement of the brake pedal 232 to the piston 42 to move the piston 42 forwards in the cylinder body 41, so that a size of a working chamber in the cylinder body 41 is changed, and then a hydraulic pressure is generated. In this embodiment, the brake master cylinder 40 has two working chambers, namely, a first working chamber and a second working chamber (neither is shown in the figure). In a normal braking condition, the integrated brake apparatus 100 is in the electronic braking mode. In this case, the first working chamber is configured to generate a hydraulic pressure supplied to the pedal simulator 70, and the second working chamber generates only a hydraulic pressure but does not output a fluid volume, that is, the hydraulic pressure of the second working chamber is not provided to the wheel brake 231. In the backup braking mode, the hydraulic pressures generated by both the first working chamber and the second working chamber are supplied to the wheel brake 231 to generate a brake force. The cylinder body 41 of the brake master cylinder 40 corresponds to a first cylinder body in this application.

The motor 50 is installed on the first housing N1 by using a bolt or the like, and a rotation axis X2 (a line around which rotation is performed) of the motor 50 is arranged in a left-right direction. As shown in FIG. 5, the rotation axis X2 of the motor 50 is roughly perpendicular to the axis X1 of the brake master cylinder 40 when viewed from the top. Being roughly perpendicular herein is understood as an angle α between the rotation axis X2 and the rotation axis X1 being 90±5 degrees. In another embodiment, the angle α between the rotation axis X2 of the motor 50 and the axis X1 of the brake master cylinder 40 is 60 to 85 degrees or 95 to 120 degrees. Further, the motor 50 has a power cable 52. The power cable 52 is connected to the electronic control unit 30 through a through hole 95 on the first housing N1.

As shown in FIG. 2, FIG. 4, FIG. 6, and the like, the pump 60 is a piston pump. Therefore, the pump 60 may also be referred to as an electric hydraulic actuator chamber or electric hydraulic cylinder, and the pump 60 has a pump housing 61, a piston 62, and an end cover 63. The pump housing 61 is in a shape similar to a cylinder without a bottom and is integrally formed with the first housing N1, that is, the pump housing 61 is integrated with the first housing N1. In addition, an axis X4 (which may also be referred to as a movement axis of the piston 62) of the pump housing 61 is arranged in the left-right direction. In this embodiment, the axis X4 of the pump housing 61 and the rotation axis X2 of the motor 50 are coaxial. The piston 62 is disposed in the pump housing 61 and can slide in the pump housing 61 along the axis X4. The end cover 63 is disposed at the left end of the pump housing 61 and closes a working chamber inside the pump housing 61. In addition, the pump housing 61 corresponds to a second cylinder body in this application.

Further, as shown in FIG. 6, the motor 50 is connected to the piston 62 through a ball screw mechanism 51, so as to drive the piston 62. The ball screw mechanism 51 includes a screw 51b and a nut assembly 51a. The screw 51b is driven to rotate by the motor 50, and the nut assembly 51a is sleeved on the screw 51b to convert rotation of the screw 51b into linear motion along the screw 51b. The nut assembly 51a is connected to the piston 62, so as to drive the piston 62 to perform linear motion within the pump housing 61.

As shown in FIG. 2, FIG. 4, and the like, the pedal simulator 70 includes a hydraulic cylinder having a cylinder body 71 and a piston (not shown) that can slide in the cylinder body 71. The cylinder body 71 is approximately cylindrical. An axis X3 of the cylinder body 71 is arranged roughly in the front-rear direction, and is parallel to the axis X1 of the brake master cylinder 40. Further, as shown in FIG. 4, the cylinder body 71 is disposed on the top right side of the cylinder body 41 of the brake master cylinder 40. The cylinder body 71 herein corresponds to a third cylinder body in this application.

As shown in FIG. 8 and FIG. 2 to FIG. 4, the fluid reservoir 80 is disposed above the first housing N1, and three oil supply ports 81, 82, and 83 are disposed on a lower surface of the fluid reservoir 80. The first housing N1 is provided with two oil passage ports 91 and 92. A second housing N2 in the following descriptions is provided with one oil passage port 21 (corresponding to a first oil passage port in this application). The oil supply port 82 of the fluid reservoir 80 is connected to the oil passage port 92 of the first housing N1 for supplying oil to the second working chamber of the brake master cylinder 40. The oil supply port 83 of the fluid reservoir 80 is connected to the oil passage port 21 of the second housing N2 for supplying oil to the first working chamber of the brake master cylinder 40. The oil supply port 81 of the fluid reservoir 80 is connected to the oil passage port 91 of the first housing N1 for supplying oil to the pump 60.

Since oil supply to the first working chamber of the brake master cylinder 40 is controlled by the valve apparatus 24 in the hydraulic control unit 20, and the valve apparatus 24 is disposed in the second housing N2, a part of an oil passage used for supplying oil to the first working chamber of the brake master cylinder 40 is also disposed in the second housing N2. Therefore, in this embodiment, the second housing N2 is provided with the oil passage port 21 communicating with the fluid reservoir 80, and the fluid reservoir 80 communicates, through the oil passage port 21, with an internal oil passage for supplying oil to the first working chamber of the brake master cylinder 40 in the second housing N2. By using the foregoing structure rather than a structure in which the oil passage port is disposed on the first housing N1, and the oil passage port communicates, through the internal oil passage of the first housing N1, with the internal oil passage for supplying oil to the first working chamber of the brake master cylinder 40 in the second housing N2, an internal oil passage structure of the first housing N1 is simplified, and a quantity of sealed points connecting the internal oil passage on the first housing N1 side and the internal oil passage on the second housing N2 side is reduced.

The following further describes a structure of the first housing N1 in detail with reference to FIG. 7.

As shown in FIG. 7, the first housing N1 has a body 90 that is roughly in a shape of a flat rectangular cuboid or a thick plate, and a plurality of internal oil passages (not shown) are disposed inside the body 90. Therefore, the first housing N1 may also be referred to as a first hydraulic block N1. In this embodiment, the first housing N1 is a casting made of aluminum or the like, and is a final product obtained through machining after casting. In addition, a thickness direction of the body 90 is the left-right direction. A left side surface 90a of the body 90 faces the hydraulic control unit 20 and the electronic control unit 30. A right side surface 90b is used for disposing the motor 50. In other words, in this embodiment, the motor 50 is disposed on the side that is of the first housing N1 and that is far away from the electronic control unit 30.

In addition, the body 90 of the first housing N1 includes a thick plate part 901 at the top and a thin plate part 902 at the bottom. Thickness of the thin plate part 902 is less than that of the thick plate part 901. In this case, the left side surface 90a of the first housing N1 is a tiered surface. The left side surface 90a of the thin plate part 902 protrudes to form the pump housing 61. As described above, the pump housing 61 is cylindrical and the axis X4 of the pump housing 61 is perpendicular to the left side surface 90a.

The cylinder body 41 of the brake master cylinder 40 is integrally formed on the upper part of the thick plate part 901. As shown in FIG. 3, when viewed in the front-rear direction, the cylinder body 41 and the body 90 are roughly aligned in the left-right direction. Compared with a structure in which the cylinder 41 is disposed on a left or right side of the body 90, a total size of the cylinder 41 and the body 90 in the left-right direction can be reduced.

In addition, the cylinder body 71 of the pedal simulator 70 is integrally formed on the upper part of the thick plate part 901, and is located on the top right side of the cylinder body 41.

Further, as shown in FIG. 4, FIG. 6, FIG. 7, and the like, an upper surface 90c (which may be referred to as an upper surface of the body 90) of the thick plate part 901 protrudes to form the oil passage ports 91 and 92, and the oil passage port 91 is located behind the oil passage port 92.

Further, a plurality of oil passage ports 93 are disposed on the left side surface 90a of the thick plate part 901, and the oil passage ports 93 respectively communicate with a plurality of oil passage ports 25 (FIG. 4) on the second housing N2 in the following descriptions. In this way, the internal oil passage on the first housing N1 side communicates with the internal oil passage on the second housing N2 side. The oil passage port 93 herein corresponds to a second oil passage port in this application, and the oil passage port 25 corresponds to a third oil passage port in this application.

As shown in FIG. 7, an oil passage port 611a is disposed on a left end surface 611 of the pump housing 61, and the oil passage port 611a is not closed by the end cover 63. That is, there is space between an inner bottom surface of the end cover 63 and the left end surface 611 of the pump housing 61. Through the space, the oil passage port 611a communicates with the working chamber in the pump housing 61. In another aspect, the oil passage port 611a communicates with one oil passage port 93 on the left side surface 90a through an oil passage 94 in the first housing N1, and supplies a hydraulic pressure to the wheel brake 231 through the internal oil passage in the second housing N2 and the valve apparatus 24. The oil passage 94 and the oil passage port 93 communicating with the oil passage 94 constitute a part of an oil passage between the pump 60 and the wheel brake 231. The oil passage between the pump 60 and the wheel brake 231 may be referred to as an electronic brake oil passage, and an oil passage between the brake master cylinder 40 and the wheel brake 231 may be referred to as a backup brake oil passage.

The following provides detailed descriptions of the hydraulic control unit 20 with reference to FIG. 2, FIG. 3, FIG. 4, and the like.

As shown in FIG. 2, FIG. 3, and FIG. 4, the hydraulic control unit 20 is mostly arranged on a left side of the first housing N1, and includes the second housing N2 and the valve apparatus 24 installed in the second housing N2. The second housing N2 and the first housing N1 are assembled by using bolts or the like not shown in the figure. The second housing N2 is roughly in the shape of a flat rectangular cuboid or a thick plate. The thickness direction of the second housing N2 is the left-right direction. A plurality of internal oil passages (not shown) are disposed in the second housing N2. Therefore, the second housing N2 may also be referred to as a second hydraulic block N2. The valve apparatus 24 includes a plurality of valves (not shown) respectively arranged in the internal oil passages of the second housing N2 for controlling opening/closing of the oil passages, specifically, controlling opening/closing of the oil passage between the pump 60 and the wheel brake 231, that is, the electronic brake oil passage, and controlling opening/closing of the oil passage between the brake master cylinder 40 and the wheel brake 231, that is, the backup brake oil passage. In this way, either the electronic brake oil passage or the backup brake oil passage is open, so that either the hydraulic pressure generated by the pump 60 or the hydraulic pressure generated by the brake master cylinder 40 is supplied to the wheel brake 231. In other words, only one of the hydraulic pressure generated by the pump 60 and the hydraulic pressure generated by the brake master cylinder 40 is supplied to the wheel brake 231 at one time, to enable the wheel brake 231 to generate the brake force. In addition, the valve apparatus 24 is further configured to adjust a degree of opening (opening degree) of the valve to adjust strength of the hydraulic pressure supplied to the wheel brake 231, so as to adjust strength of the brake force generated by the wheel brake 231. In this embodiment, for example, the second housing N2 may be made of an extruded aluminum profile on which a hole for disposing a valve of the valve apparatus 24 is formed through machining, and the valve of the valve apparatus 24 is installed in the second housing N2 by riveting.

As shown in FIG. 4, the plurality of oil passage ports 25 are provided on a right side surface 20a of the second housing N2, that is, a side surface facing the first housing N1. These oil passage ports 25 are openings of the internal oil passages in the second housing N2 on the right side surface 20a, and respectively communicate with the plurality of oil passage ports 93 (FIG. 7) on the left side surface 90a of the first housing N1.

In this embodiment, a sealing plate component 29 is disposed between the first housing N1 and the second housing N2, and the sealing plate component 29 is in a shape of a thin plate. A plurality of through holes 23 are disposed on the sealing plate component 29. Positions of the plurality of through holes 23 correspond to the oil passage ports 93 on the first housing N1 and the plurality of oil passage ports 25 on the second housing N2. On the sealing plate component 29, a sealing ring (not shown) is fixed at a position of each through holes 23. When the first housing N1 and the second housing N2 are butted and assembled by using bolts, the sealing plate component 29 is sandwiched between the first housing N1 and the second housing N2, and the through holes 23 are aligned with the oil passage ports 93 on the first housing N1 and the plurality of oil passage ports 25 on the second housing N2 while outer peripheries thereof are sealed by sealing rings. In this structure, the plurality of sealing rings are fixed to the sealing plate component 29. When the integrated brake apparatus 100 is assembled, one sealing plate component 29 to which the plurality of sealing rings are fixed is disposed between the first housing N1 and the second housing N2. When the foregoing structure rather than a structure in which a plurality of sealing rings are separately disposed is used, an assembly process is simplified, and assembly time is shortened.

In addition, an oil outlet 22 is disposed at a position near a front edge of the right side surface 20a of the second housing N2, and the oil outlet 22 is connected to the brake hose 233 (FIG. 1), so that the hydraulic pressure for braking can be supplied to the wheel brake 231. The right side surface 20a is a surface of a side that is of the second housing N2 and that is far away from the electronic control unit (30).

As shown in FIG. 2, FIG. 3, and FIG. 4, the electronic control unit 30 is disposed on a left side of the second housing N2, and is configured to control the motor 50 and the valve apparatus 24 in the second housing N2. As shown in FIG. 4, the electronic control unit 30 is provided with a coil mechanism 24a of the valve apparatus 24, and the electronic control unit 30 controls the valves in the valve apparatus 24 through the coil mechanism 24a. As described above, when the driver presses the brake pedal 232 (FIG. 1), the electronic control unit 30 detects movement of the brake pedal 232 through a pedal travel sensor (not shown) or the like disposed on the pedal connecting rod 45, and controls operation of the motor 50 based on a movement amount and a movement speed of the brake pedal 232. The pump 60 is driven by the motor 50 to generate the hydraulic pressure. Meanwhile, the electronic control unit 30 controls a corresponding valve in the valve apparatus 24 in the hydraulic control unit 20 to control a state of the oil passage between the pump 60 and the wheel brake 231, so that the hydraulic pressure generated by the pump 60 can be supplied to the wheel brake 231, and then the wheel brake 231 can brake the wheel 220. Further, the electronic control unit 30 may perform braking according to a braking command received from the vehicle controller (not shown).

The integrated brake apparatus 100 of this embodiment basically has the structure described above. In the foregoing descriptions, it is specified that the directions of top, bottom, front, rear, left, and right are defined based on the vehicle body, but these directions may also be defined based on the structure of the integrated brake apparatus 100. For example, the front-rear direction may be defined as a direction in which the pedal connecting rod 45 moves, and a top-bottom direction that is also referred to as a second direction is defined as a direction that the opening of the oil fill port 84 of the fluid reservoir 80 faces (the opening of the oil fill port 84 faces upwards). The left-right direction or a first direction is perpendicular to the front-rear direction and the top-bottom direction (or the second direction).

The integrated brake apparatus 100 in this embodiment has the first housing N1 and the second housing N2. The cylinder body 41 of the brake master cylinder 40, the pump housing 61 of the pump 60, and the first housing N1 are integrally formed. The motor 50 is disposed on the first housing N1. The valve apparatus 24 is disposed on the second housing N2. The motor 50, the first housing N1, the second housing N2, and the electronic control unit 30 are sequentially arranged in the left-right direction.

Because the cylinder body 41 of the brake master cylinder 40, the pump housing 61 of the pump 60, and the first housing N1 are integrally formed, and the valve apparatus 24 is disposed on the second housing N2 different from the first housing N1, the first housing N1 and the second housing N2 may be processed separately according to different processing requirements. In this way, problems such as complex manufacturing and manufacturing cost increase caused by the use of one housing can be avoided.

Specifically, for example, the cylinder body 41 of the brake master cylinder 40 and the pump housing 61 of the pump 60 usually need to be abrasion-resistant, and therefore, high strength is required. However, because installation of the valve apparatus 24 is achieved by riveting, stiffness of a housing on which the valve apparatus 24 is disposed needs to be low. Therefore, special processing is required, so that the cylinder body 41 of the brake master cylinder 40, the pump housing 61 of the pump 60, and the housing on which the valve apparatus 24 is disposed can be integrally formed. For example, when a soft extrusion material is used for housing manufacturing, a material for forming the cylinder body 41 of the brake master cylinder 40 and the pump housing 61 of the pump 60 needs to be hardened. This results in complex manufacturing and manufacturing cost increase. However, in this embodiment, the cylinder body 41 of the brake master cylinder 40, the pump housing 61 of the pump 60, and the first housing N1 are integrally formed, and the valve apparatus 24 is disposed on the second housing N2 different from the first housing N1. Therefore, the technical problems of complex manufacturing and manufacturing cost increase caused by the use of one housing can be avoided.

In addition, due to the use of the structure in which the cylinder body 41 of the brake master cylinder 40 and the pump housing 61 of the pump 60 that have the same or similar processing requirements are integrally formed on one housing, that is, the first housing N1, rather than a structure in which the cylinder body 41 and the pump housing 61 are respectively formed on different housings, a quantity of sealed points between different housings can be reduced while complex manufacturing and manufacturing cost increase are avoided, thereby reducing a probability of sealing leakage and improving an operation reliability of the integrated brake apparatus 100.

In addition, the first housing N1, the second housing N2, and the electronic control unit 30 are arranged in the left-right direction (corresponding to "the first direction" and "the vehicle width direction" in this application) perpendicular to the top-bottom direction. Therefore, compared with arrangement in the top-bottom direction, the arrangement in the left-right direction can prevent an upper part of the integrated brake apparatus 100 from being excessively large or tall, to improve disposition flexibility of the integrated brake apparatus 100 on the vehicle 300. Specifically, as shown in FIG. 1, the integrated brake apparatus 100 is usually disposed in a place in front of the brake pedal 232 and above the driver's foot, where mechanisms such as a windshield drain for a wiper blade are usually disposed. Therefore, if the upper part of the integrated brake apparatus 100 is large or tall, the upper part of the integrated brake apparatus 100 may be easily affected by the windshield drain and the like. This reduces disposition flexibility. In this embodiment, the motor 50, the first housing N1, and the second housing N2 are arranged in the left-right direction, and therefore, the upper part of the integrated brake apparatus 100 is not large or tall. This improves disposition flexibility of the integrated brake apparatus 100 on the vehicle 300.

In addition, in this embodiment, the oil outlet 22 is disposed on the right side surface 20a of the second housing N2, that is, the side surface that is far away from the electronic control unit 30, in other words, that does not face the electronic control unit 30, so that the oil outlet 22 can be kept away from the electronic control unit 30. For example, contamination of the electronic control unit 30 caused by oil leakage can be avoided.

Further, in this embodiment, because the oil passage port 21 connected to the fluid reservoir 80 is disposed on the second housing N2, a smaller quantity of internal oil passages of the first housing N1 is needed compared with that in the structure in which the oil passage port is disposed on the first housing N1. In this way, complexity of the entire oil passage structure of the integrated brake apparatus 100 is reduced.

In addition, in this embodiment, the sealing plate component 29 is disposed between the first housing N1 and the second housing N2, so that the plurality of sealing rings can be fixed to the sealing plate component 29. The plurality of sealing rings and the sealing plate component 29 can be assembled as a whole. In this case, assembly can be simplified, and assembly time can be shortened.

A second embodiment is described below. A main difference between an integrated brake apparatus 200 in the second embodiment and the integrated brake apparatus 100 in the first embodiment is that in the first embodiment, the motor 50 is disposed on the side that is of the first housing N1 and that is far away from the electronic control unit 30, but in this embodiment, a motor 150 is disposed on a side that is of a first housing N10 and that is close to an electronic control unit 130. In addition, in the foregoing embodiment, the pedal simulator 70 is disposed according to a manner in which the axis of the cylinder body 71 is parallel to the axis X1 of the cylinder body 41 of the brake master cylinder 40. In this embodiment, an axis of a cylinder body 171 of a pedal simulator 170 is perpendicular to an axis of a cylinder body 141 of a brake master cylinder 140 in the top-bottom direction.

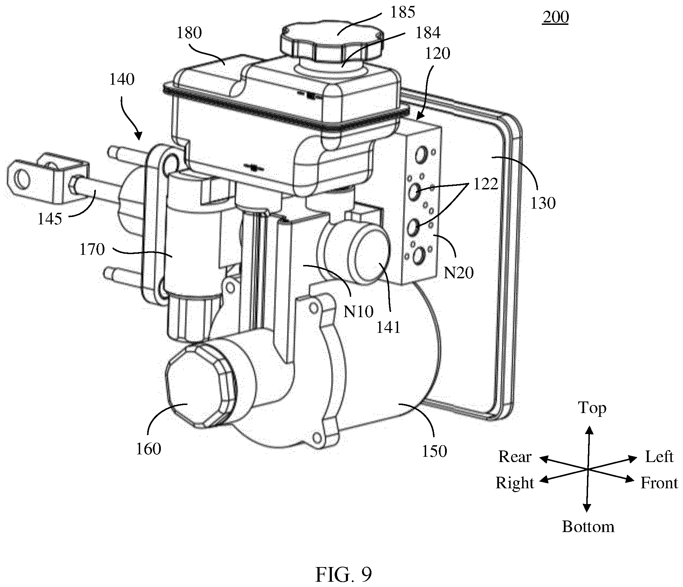

The second embodiment is described below in detail with reference to FIG. 9 to FIG. 11. In the following descriptions, a part similar to that in the first embodiment is omitted or briefly described.

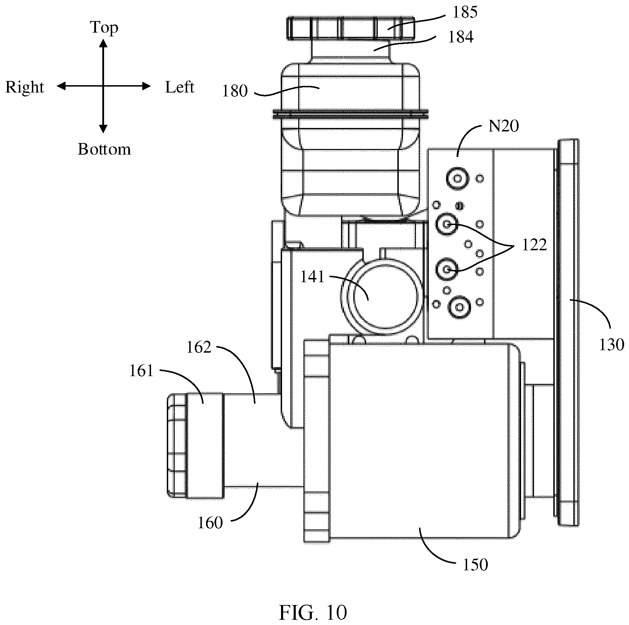

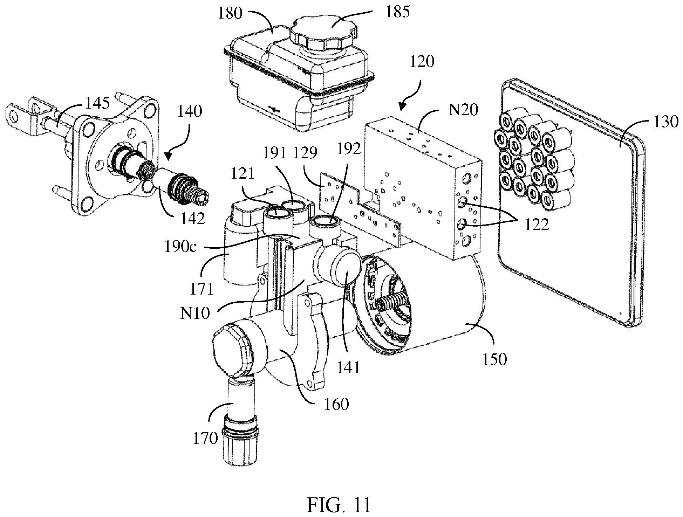

FIG. 9 is a three-dimensional diagram of the integrated brake apparatus 200 according to the second embodiment; FIG. 10 is a side view of the integrated brake apparatus 200; and FIG. 11 is an exploded view of the integrated brake apparatus 200.

As shown in FIG. 9 to FIG. 11, the integrated brake apparatus 200 has a brake master cylinder 140, the motor 150, a pump 160, a hydraulic control unit 120, the electronic control unit 130, and a fluid reservoir 180. The brake master cylinder 140, the motor 150, and the pump 160 are integrated to the first housing N10 to form a hydraulic unit. The hydraulic control unit 120 includes a second housing N20 and a valve apparatus (not shown) disposed in the second housing N20. The first housing N10, the second housing N20, and the electronic control unit 30 are arranged in the left-right direction.

In addition, the brake master cylinder 140 includes a cylinder body 141 and a piston 142 disposed in the cylinder body 141. The piston 142 is driven by a pedal connecting rod 145 to slide in the cylinder body 141, thereby generating a hydraulic pressure for braking. The cylinder body 141 and the first housing N10 are integrally formed. The pump 160 has a pump housing 161, an end cover 162, and a piston (not shown). The pump housing 161 may also be referred to as a cylinder body of a hydraulic cylinder and is integrally formed with the first housing N10. The motor 150 is disposed on the first housing N10, and can drive the piston of the pump 160 to slide in the pump housing 161 through a transmission mechanism (not shown) to generate the hydraulic pressure for braking. The cylinder body 141 in this embodiment corresponds to a first cylinder body in this application, and the pump housing 161 corresponds to a second cylinder body in this application.

Further, in this embodiment, the motor 150 is disposed on a side surface of the first housing N10 near or facing the electronic control unit 130, and an angle sensor (not shown) of the motor 150 is integrated to the electronic control unit 130. In addition, a side surface that is of the first housing N10 and that is far away from the electronic control unit 130 protrudes to form the pump housing 161, in other words, that does not face the electronic control unit 130.

The fluid reservoir 180 stores oil, and is configured to supply working oil (that is, supply oil) to the brake master cylinder 140, the pump 160, the pedal simulator 170, and the like. In addition, as shown in FIG. 9, FIG. 10, and the like, the fluid reservoir 180 has an oil fill port 184. The oil fill port 184 has an opening facing upwards, and is used for filling the fluid reservoir 180 with oil. A cover 185 is disposed on the fill port 184 to prevent foreign objects entering the fluid reservoir 180.

As shown in FIG. 11, three oil passage ports 191, 192, and 121 are disposed on an upper surface 190c of the first housing N10, and the three oil passage ports 191, 192, and 121 are respectively connected to three oil passage ports (not shown) on the fluid reservoir 180. The oil passage port 191 is configured to supply oil to the pump 60. The oil passage port 192 is configured to supply oil to a second working chamber of the brake master cylinder 40. The oil passage port 121 is configured to supply oil to a first working chamber of the brake master cylinder 40. In addition, a plurality of oil outlets 122 are disposed on a front surface of the second housing N20, and the oil outlets 122 are connected to the brake hose 233 to supply a hydraulic pressure to the wheel brake 231.

As shown in FIG. 9 and FIG. 11, a cylinder body 171 of a pedal simulator 170 is disposed in a part of a side that is of the first housing N10 and that is far away from the second housing N20 (in other words, the pedal simulator 170 is located on a side that is of the brake master cylinder 140 and that is far away from the electronic control unit 130), and is behind the pump housing 161 of the pump 160 and the motor 150, where an axis of the cylinder body 171 is arranged in the top-bottom direction and perpendicular to the axis of the cylinder body 141 of the brake master cylinder 140. In this case, the pedal simulator 170 is disposed in space behind the pump 160, and the space can be fully utilized. In this way, the integrated brake apparatus 200 is compact as a whole. The cylinder body 171 of the pedal simulator 170 corresponds to a third cylinder body in this application.

In addition, as shown in FIG. 11, a sealing plate component 129 is sandwiched between the first housing N10 and the second housing N20, and a plurality of sealing rings (not shown) are fixed to the sealing plate component 129 to seal the oil passage ports connecting the first housing N10 and the second housing N20. A specific structure thereof is described in the first embodiment, and details are not described herein again.

In the second embodiment, the cylinder body 141 of the brake master cylinder 140, the pump housing 161 of the pump 160, and the first housing N10 are integrally formed, and the valve apparatus is disposed in the second housing N20. Therefore, problems of complex manufacturing and high costs of manufacturing a large housing can be avoided by using the foregoing structure rather than a structure in which the cylinder body 141 of the brake master cylinder 140, the pump housing 161 of the pump 160, and the valve apparatus are disposed in one housing. Further, the first housing N10, the second housing N20, and the electronic control unit 30 are arranged in the left-right direction. Therefore, compared with stacked arrangement in the top-bottom direction, the arrangement in the left-right direction prevents an upper part of the integrated brake apparatus 200 from being excessively large or tall to improve disposition flexibility of the integrated brake apparatus 200 on the vehicle 300.

The foregoing descriptions are example implementations of this application. However, this application is not limited thereto. Variations may be made without departing from the spirit and scope of this application, and the variations shall fall within the protection scope of this application.

## Claims

1. An integrated brake apparatus of a vehicle, comprising:
a first housing (N1, N10);
a brake master cylinder (40, 140), wherein the brake master cylinder (40, 140) is configured to generate a hydraulic pressure under action of a brake pedal (232), and has a first cylinder body (41, 141), wherein the first cylinder body (41, 141) and the first housing (N1, N10) are integrally formed;
a motor (50, 150), wherein the motor (50, 150) is disposed on the first housing (N1, N10);
a pump (60, 160), wherein the pump (60, 160) is configured to generate a hydraulic pressure when driven by the motor (50, 150), and has a pump housing (61, 161), wherein the pump housing (61, 161) and the first housing (N1, N10) are integrally formed;
a second housing (N2, N20), wherein the second housing (N2, N20) and the first housing (N1, N10) are assembled;
a valve apparatus (24), wherein the valve apparatus is disposed in the second housing (N2, N20), and is configured to enable either a hydraulic pressure generated by the brake master cylinder (40, 140) or a hydraulic pressure generated by the pump (60, 160) to be supplied to a wheel brake (231), and is configured to adjust strength of a hydraulic pressure supplied to the wheel brake (231);
a fluid reservoir (80, 180), wherein the fluid reservoir (80, 180) has an oil fill port (84, 184); and
an electronic control unit (30, 130), wherein
the first housing (N1, N10), the second housing (N2, N20), and the electronic control unit (30, 130) are arranged in a first direction, wherein the first direction is perpendicular to a second direction, and the second direction is a direction that an opening of the oil fill port (84, 184) faces.

2. The integrated brake apparatus according to claim 1, wherein the motor (50) is disposed on a side that is of the first housing (N1) and that is far away from the electronic control unit (30).

3. The integrated brake apparatus according to claim 1, wherein the motor (150) is disposed on a side that is of the first housing (N10) and that is close to the electronic control unit (130).

4. The integrated brake apparatus according to claim 2 or 3, wherein a rotation axis (X2) of the motor (50, 150) is perpendicular to an axis (X1) of the first cylinder body (41, 141).

5. The integrated brake apparatus according to claim 2 or 3, wherein an included angle between a rotation axis (X2) of the motor (50, 150) and an axis (X1) of the first cylinder body (41, 141) is 60 degrees to 120 degrees.

6. The integrated brake apparatus according to any one of claims 1 to 5, wherein an oil outlet (22) is disposed on a surface (20a) of a side that is of the second housing (N2) and that is far away from the electronic control unit (30), and the oil outlet (22) is configured to supply the hydraulic pressure to the wheel brake (231).

7. The integrated brake apparatus according to any one of claims 1 to 6, wherein a first oil passage port (21) is disposed on the second housing (N2), and the first oil passage port (21) is connected to the fluid reservoir (80).

8. The integrated brake apparatus according to claim 7, wherein the first oil passage port (21) is configured to supply oil to the brake master cylinder (40).

9. The integrated brake apparatus according to any one of claims 1 to 8, wherein a plurality of second oil passage ports (93) are disposed on the first housing (N1, N10), a plurality of third oil passage ports (25) are disposed on the second housing (N2, N20), and the second oil passage ports (93) are connected to the third oil passage ports (25).

10. The integrated brake apparatus according to claim 9, wherein a sealing plate component (29, 129) is disposed between the first housing (N1, N10) and the second housing (N2, N20), the sealing plate component (29, 129) is provided with a plurality of through holes (23) corresponding to positions of the second oil passage ports (93) and the third oil passage ports (25).

11. The integrated brake apparatus according to any one of claims 1 to 10, wherein the rotation axis (X2) of the motor (50) extends in the first direction.

12. The integrated brake apparatus according to any one of claims 1 to 11, wherein the pump (60, 160) is a hydraulic cylinder, the pump housing (61, 161) is a second cylinder body of the hydraulic cylinder, and an axis (X4) of the second cylinder body extends in the first direction.

13. The integrated brake apparatus according to claim 12, wherein the rotation axis (X1) of the motor (50, 150) and the axis (X4) of the second cylinder body are coaxial.

14. The integrated brake apparatus according to any one of claims 1 to 13, further comprising a pedal simulator (170), wherein the pedal simulator (170) comprises a hydraulic cylinder having a third cylinder body (171), and an axis (X3) of the third cylinder body (171) extends in the second direction.

15. The integrated brake apparatus according to claim 14, wherein
the pump housing (161) is disposed on a side that is of the first housing (N10) and that is far away from the second housing (N20), and is integrally formed with the second housing (N20); and
the third cylinder body (171) is disposed on the side that is of the first housing (N10) and that is far away from the second housing (N20).

16. A vehicle, comprising a brake pedal (232) and an integrated brake apparatus (100, 200), wherein
the brake pedal (232) is configured to swing around an axis (X5) extending in a first direction when pressed by a driver; and
the integrated brake apparatus (100, 200) comprises:
a first housing (N1, N10);
a brake master cylinder (40, 140), wherein the brake master cylinder (40, 140) is configured to generate a hydraulic pressure under action of the brake pedal (232), and has a first cylinder body (41, 141), wherein the first cylinder body (41, 141) and the first housing (N1, N10) are integrally formed;
a motor (50, 150), wherein the motor (50, 150) is disposed on the first housing (N1, N10);
a pump (60, 160), wherein the pump (60, 160) is configured to generate a hydraulic pressure when driven by the motor (50, 150), and has a pump housing (61, 161), wherein the pump housing (61, 161) and the first housing (N1, N10) are integrally formed;
a second housing (N2, N20), wherein the second housing (N2, N20) and the first housing (N1, N10) are assembled;
a valve apparatus (24), wherein the valve apparatus is disposed in the second housing (N2, N20), and is configured to enable either a hydraulic pressure generated by the brake master cylinder (40, 140) or a hydraulic pressure generated by the pump (60, 160) to be supplied to a wheel brake (231), and is configured to adjust strength of a hydraulic pressure supplied to the wheel brake (231);
a fluid reservoir (80, 180), wherein the fluid reservoir (80, 180) having an oil fill port (84, 184); and
an electronic control unit (30), wherein
the first housing (N1, N10), the second housing (N2, N20), and the electronic control unit (30) are arranged in the first direction, wherein the first direction is perpendicular to a second direction, and the second direction is a direction that an opening of the oil fill port (84, 184) faces.

17. The vehicle according to claim 16, wherein the motor (50) is disposed on a side that is of the first housing (N1) and that is far away from the electronic control unit (30).

18. The vehicle according to claim 16, wherein the motor (150) is disposed on a side that is of the first housing (N10) and that is close to the electronic control unit (130).

19. The vehicle according to claim 17 or 18, wherein a rotation axis (X2) of the motor (50, 150) is perpendicular to an axis (X1) of the first cylinder body (41, 141).

20. The vehicle according to claim 17 or 18, wherein an included angle between a rotation axis (X2) of the motor (50, 150) and an axis (X1) of the first cylinder body (41, 141) is 60 degrees to 120 degrees.

21. The vehicle according to any one of claims 16 to 20, wherein an oil outlet (22) is disposed on a surface (20a) of a side that is of the second housing (N2) and that is far away from the electronic control unit (30), and the oil outlet (22) is configured to supply the hydraulic pressure to the wheel brake (231).

22. The vehicle according to any one of claims 16 to 21, wherein a first oil passage port (21) is disposed on the second housing (N2), and the first oil passage port (21) is connected to the fluid reservoir (80).

23. The vehicle according to claim 22, wherein the first oil passage port (21) is configured to supply oil to the brake master cylinder (40).

24. The vehicle according to any one of claims 16 to 23, wherein a plurality of second oil passage ports (93) are disposed on the first housing (N1, N10), a plurality of third oil passage ports (25) are disposed on the second housing (N2, N20), and the second oil passage ports (93) are connected to the third oil passage ports (25).

25. The vehicle according to claim 24, wherein a sealing plate component (29, 129) is disposed between the first housing (N1, N10) and the second housing (N2, N20), the sealing plate component (29, 129) is provided with a plurality of through holes (23) corresponding to positions of the second oil passage ports (93) and the third oil passage ports (25).

26. The vehicle according to any one of claims 16 to 25, wherein the rotation axis (X2) of the motor (50) extends in the first direction.

27. The vehicle according to any one of claims 16 to 26, wherein the pump (60, 160) is a hydraulic cylinder, the pump housing (61, 161) is a second cylinder body, and an axis (X4) of the second cylinder body extends in the first direction.

28. The vehicle according to claim 27, wherein the rotation axis (X1) of the motor (50, 150) and the axis (X4) of the second cylinder body are coaxial.

29. The vehicle according to any one of claims 16 to 28, further comprising a pedal simulator (170), wherein the pedal simulator (170) comprises a hydraulic cylinder having a third cylinder body (171), and an axis (X3) of the third cylinder body (171) extends in the second direction.

30. The vehicle according to claim 29, wherein
the pump housing (161) is disposed on a side that is of the first housing (N10) and that is far away from the second housing (N20), and is integrally formed with the second housing (N20); and
the third cylinder body (171) is disposed on the side that is of the first housing (N10) and that is far away from the second housing (N20).
